# EUROPÄISCHE PATENTANMELDUNG

(11) **EP 1 238 874 A1**
(43) Veröffentlichungstag der Anmeldung: **11.09.2002**
(21) Anmeldenummer: 01105666.0
(22) Anmeldetag: 07.03.2001
(51) Int. Cl.: B60S 1/34, A47L 1/02, B60S 1/28

(54) **Scheibenwischer**

(71) Anmelder: Büse, Joachim, 33034 Brakel-Beller (DE); George, Thomas, Dr., 34125 Kassel (DE)
(72) Erfinder: Büse, Joachim, 33034 Brakel-Beller (DE); George, Thomas, Dr., 34125 Kassel (DE)
(74) Vertreter: Freiherr von Gravenreuth, Günter, Dipl.-Ing. (FH)

(57) **Zusammenfassung**

Die Erfindung betrifft einen mechanischen Scheibenwischer, wobei ein Wischerarm parallel zu einer Scheibe angeordnet ist, wobei dieser Wischerarm mindestens ein Wischerblatt trägt, welches parallel zum Wischerarm angeordnet ist, wobei der Wischerarm mit mindestens einem Schlitten verbunden ist, welcher in einer Führungsschiene angeordnet ist, wobei die Führungsschiene im wesentlichen rechtwinklig zum Wischerarm verläuft, und wobei der Schlitten mit einem Antriebselement verbunden ist.

## Beschreibung

Die Erfindung betrifft einen mechanischen Scheibenwischer.

Mechanische Scheibenwischer sind insbesondere für Land-, Luftund Wasserfahrzeuge bekannt. Alle diese bestehenden Systeme gehen davon aus, daß der (oder die) Wischerarm(e) sektorförmig über die Scheibe bewegt werden. Letzteres ist darauf zurückzuführen, daß bei den ersten Kraftfahrzeugen der Scheibenwischer teilweise noch manuell betätigt wurde. Hierfür war ein auf einer Achse angeordneter Bedienhebel vorgesehen, wobei an dem anderen Ende der Achse ein Wischerarm angeordnet war. Der Bewegungsarm und der Wischerarm wurden dann parallel geführt. Später wurden diese Bewegungen durch Hydraulikelemente (heute noch bei Straßenbahnen im Einsatz), bzw. über Elektromotoren betätigt.

Es liegt auf der Hand, daß durch eine sektorförmige Schwenkbewegung nur ein Teil der Scheibe gereinigt werden kann. Zur Verbesserung dieses Systems ist beispielsweise bei Personen-Kraftfahrzeugen des Herstellers Daimler-Benz bekannt, daß durch eine aufwendige Mechanik über Nockensteuerungen der Scheibenwischer auch koaxial zum Wischerarm bewegt wird, so daß kein Wischsektor, sondern eine größere Wischfläche mit kurvenförmiger oberen und unteren Begrenzung erzielt wird.

Es gibt bzw. gab kleine, zumeist ein- oder zweisitzige Fahrzeuge mit stark gewölbten Scheiben. Als historisches Fahrzeug dieser Bauart wird auf den Messerschmitt-Kabinenroller, als aktuelles Fahrzeug auf das C1-"Motorrad" von BMW verwiesen. Derartige Fahrzeuge haben stark gewölbte Scheiben, welche in etwa auf der Höhe der Armaturen beginnen und sich nach hinten in Richtung Fahrzeugende erstrecken. In Folge der starken Wölbung sind bei derartigen Fahrzeugen sektorförmige Wischer nicht praktikabel. Man hat bei derartigen Fahrzeugen daher entweder eine (aerodynamisch nachteilige) plane Frontscheibe verwendet oder die Verglasung insgesamt so gestaltet, daß durch den Fahrtwind das Wasser weggeblasen wird. Bei letztgenannter Lösung ist jedoch eine Mindestgeschwindigkeit erforderlich, d. h. bei Langsamfahrten im Stadtverkehr oder im Stau reicht der Fahrtwind nicht aus, die Scheibe auch nur annähernd freizuhalten. Insbesondere bei einem schmutzigen Spritzwasser vom voranfahrenden Fahrzeug, bei einem dichten Schneefall von Naßschnee oder ähnlichem hat der Fahrer eines solchen Fahrzeuges fast keine Sicht.

Sämtliche sektorförmigen Scheibenwischer haben zudem den Nachteil, daß sie praktisch punktförmig mit dem Wischerarm verbunden sind. Bei hohen Geschwindigkeiten führt der Fahrtwind dazu, daß die Enden des Wischerblattes flattern und/oder von der Scheibe abheben, so daß ein ordnungsgemäßes Reinigen nicht mehr erfolgt. Dies gilt insbesondere für Geschwindigkeiten über 200 km/h. Hierzu ist es bekannt, am Wischerarm spoilerartige Luftbleche anzuordnen, welche den Andruck an der Scheibe erhöhen. Bedingt durch den Umstand, daß das Wischerblatt nur an einer Stelle mit dem Wischerarm verbunden ist, wird dieser erhöhte Andruck jedoch auch nur an dieser Stelle ausgeübt, so daß diese Andruckverstärkung in den Endbereichen eines Wischerblattes kaum Wirkung zeigt.

Insbesondere bei Wasserfahrzeugen ist es ferner bekannt, runde Rotationsscheibenwischer zu verwenden. Derartige Scheibenwischer erzeugen jedoch nur eine kreisförmige Sichtfläche.

(Fenster-)Scheiben von Gebäuden werden üblicherweise manuell gereinigt. Hierzu ist es bekannt, bei höheren Gebäuden spezielle Fassadenlifte vorzusehen, so daß der Fensterputzer in einem Arbeitskorb von Fenster zu Fenster fährt.

Bei insbesonderen großen Glaskuppeln an Gebäuden sind Konstruktionen bekannt, bei denen bogenförmig ausgestaltete Treppen oder Leitern vom unteren Rand der Kuppel zum höchsten Punkt der Kuppel führen. Diese bogenförmigen Treppen oder Leitern sind am höchsten Punkt der Kuppel sowie am Kuppelrand so gelagert, daß sie um die gesamte Kuppel herum gefahren werden können. Von diesen bogenförmigen Treppen oder Leitern aus erfolgt dann die manuelle Reinigung der Glaskuppel.

Es liegt auf der Hand, daß diese Reinigungsmethoden sehr arbeitsund daher kostenintensiv ist.

Der Erfindung liegt die Aufgabe zugrunde, einen mechanischen Scheibenwischer zu schaffen, welcher bei glatten und/oder gewölbten Scheiben eine vollständige oder fast vollständige Reinigung der gesamten Scheibenfläche erzielt. Diese Aufgabe wird erfindungsgemäß durch den kennzeichnenden Teil des Anspruches 1 gelöst.

Erfindungsgemäß wird der Wischerarm (zusammen mit dem eigentlichen Scheibenwischer) nicht schwenkförmig bewegt, sondern ganz oder im Wesentlichen parallel zu einer Scheibenkante über die Scheibe geführt.

Die Erfindung ist insoweit universell ausgestaltbar, als es für die erfindungsgemäße Lösung nicht darauf ankommt, ob der Wischerarm (zusammen mit dem Scheibenwischer) senkrecht, waagerecht oder in einer anderen Position zu der Scheibe angeordent ist.

Weitere Vorteile und Merkmale der vorliegenden Erfindung ergeben sich aus dem Ausführungsbeispiel in Verbindung mit einer Zeichnung. Hierbei zeigt
Figur 1 eine perspektivische Darstellung einer Scheibe mit einem erfindungsgemäßen Scheibenwischer,
Figur 2 eine im Wesentlichen trapezförmige Scheibe mit einer weiteren Ausführungsform des erfindungsgemäßen Scheibenwischers,
Figur 3 eine andere Ausführungsform eines erfindungsgemäßen Scheibenwischers.
Figur 4 zeigt eine weitere Ausführungsform eines erfindungsgemäßen Scheibenwischers.
Figur 5 zeigt eine spezielle Ausführungsform eines Wischerarmes gemäß Figur 4.
Figur 6 zeigt die Anwendung der Erfindung auf einem Rückspiegel.
Figur 7 eine Ausführungsform zur Reinigung von Scheiben an Gebäuden.
Figur 8 zeigt eine weitere Ausführungsform zur Reinigung von Scheiben an Gebäuden.

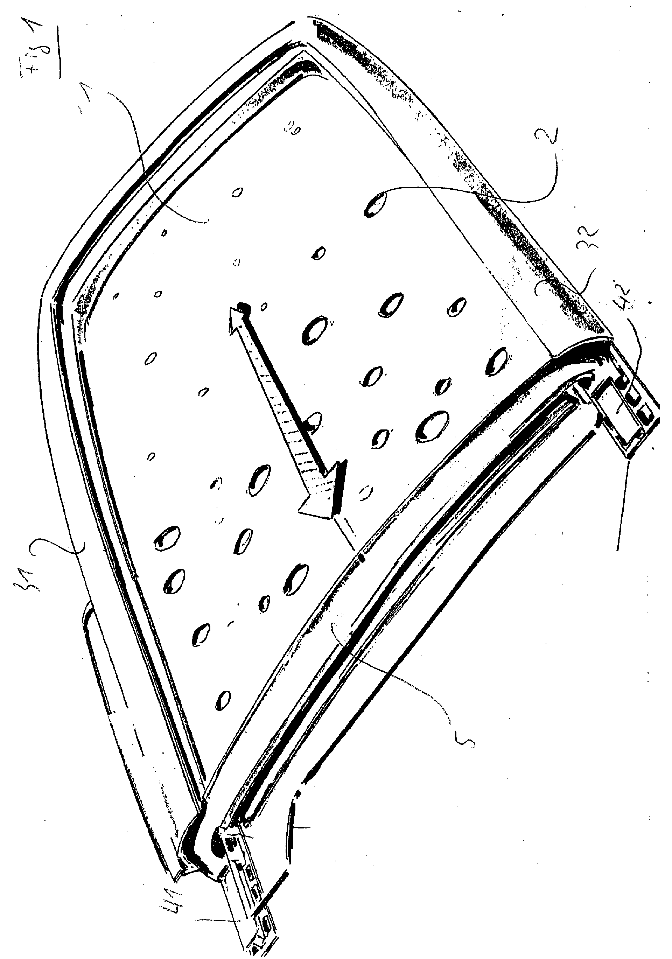

Figur 1 zeigt eine perspektivische Darstellung eines Querschnittes durch eine Glasscheibe (1), auf der sich schematisch dargestellte Wassertropfen (2) befinden.

In einem oberen Rahmen (31) und in einem unteren Rahmen (32) der Scheibe (1) sind eine obere Führungsschiene (41) und eine untere Führungsschiene (42) angeordnet. Zwischen der oberen Führungsschiene (41) und der unteren Führungsschiene (42) ist ein Wischerarm (5) angeordnet. Der Wischerarm (5) ist über mindestens einen Schlitten (20, 21) in mindestens einer Führungsschiene (41, 42) verschiebbar angeordnet. An dem Wischerarm (5) ist (nicht detailliert dargestellt) mindestens ein Wischerblatt (9) befestigt. Hierbei handelt es sich vorzugsweise um ein handelsübliches Wischerblatt (9), welches geeignet ist, sich an die Wölbung der Scheibe (1) anzupassen. In erfindungsgemäßer Weise kann auch der Wischerarm (5) gewölbt sein.

In vorteilhafter Weise ist der Wischerarm (5) auf der oberen Führungsschiene (41) und/oder der unteren Führungsschiene (42) über mindestens einen Schlitten (20, 21) so befestigt, daß er auf dieser Führungsschiene (41, 42) gleitend bewegt werden kann (nicht näher dargestellt). Hierzu können Gleitlager (nicht dargestellt) oder Gleitrollen (nicht dargestellt) in den jeweiligen Enden des Wischerarmes (5) oder in den Schlitten (20, 21) angeordnet sein.

In Bezug zu mindestens einer der oberen oder unteren Führungsschiene (41), (42) ist ein Antriebselement (nicht dargestellt) zur Bewegung des Wischerarmes (5) angeordnet.

Dieses Antriebselement ist vorzugsweise ein Linearmotor.

Es besteht jedoch auch die Möglichkeit, den Wischerarm (5) über mindestens einen Seilzug, welcher im Bereich der oberen oder unteren Führungsschiene (41), (42) angeordnet ist, zu bewegen (nicht dargestellt).

Erfindungsgemäß kann anstelle dieses Seilzuges auch ein Zahnstangenantrieb, ein Spindelantrieb oder mindestens ein Hydraulikkolben vorgesehen sein.

Es ist vorteilhaft, wenn sowohl in oder koaxial zur oberen Führungsschiene (41) und in oder koaxial zur unteren Führungsschiene (42) jeweils ein Antriebselement angeordnet ist.

In vorteilhafter Weise besteht die Möglichkeit, das Wischerblatt (9) an zwei oder mehr Punkten mit dem Wischerarm (5) zu verbinden.

Hierdurch wird erreicht, daß bei hoher Windgeschwindigkeit das Wischerblatt (9) nicht so leicht von der Glasscheibe (1) abhebt.

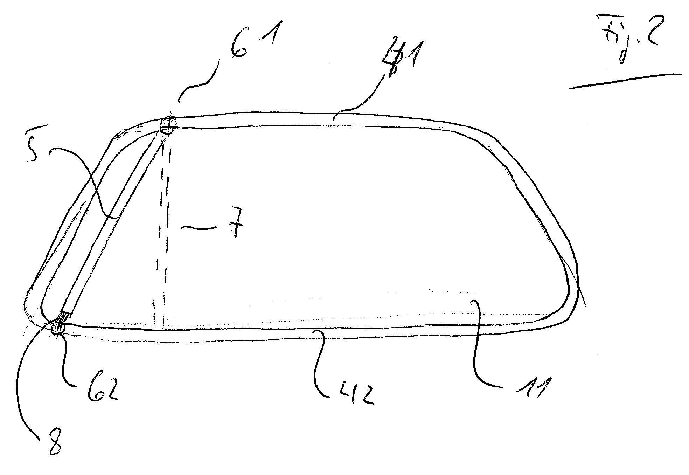

Figur 2 zeigt die Vorderansicht einer Glasscheibe (11), welche in dieser Ausführungsform eine im wesentlichen trapezförmige (Projektions-)Fläche besitzt. Bei der erfindungsgemäßen Lösung, wie sie in der Figur 1 beschrieben ist, würde auch bei einer trapezförmigen Glasscheibe (11) nur eine rechteckige Fläche gereinigt werden. Um weitgehend auch eine trapezförmige Glasscheibe (11) reinigen zu können, ist in diesem Ausführungsbeispiel der Wischerarm (5) an den Schlitten (20, 21) mit einem oberen Gelenk (61) und einem unteren Gelenk (62) ausgestattet. Wenn der Wischerarm (5) in diesem Ausführungsbeispiel seinen Endpunkt an der oberen Führungsschiene (41) erreicht hat, kann er in der unteren Führungsschiene (42) noch weiter zum Rand der Glasscheibe (11) sich bewegen, so daß über einen Endbereich (7) - als gestrichelte Darstellung des Wischerarmes (5) gezeichnet - hinaus er sich bewegen kann. Somit kann eine trapezförmige Reinigungsfläche erreicht werden. Da der Abstand zwischen dem oberen Gelenk (61) und dem unteren Gelenk (62) größer ist, als der rechtwinklige Abstand zwischen der oberen Führungsschiene (41) und der unteren Führungsschiene (42), besitzt der Wischerarm (5) in diesem Ausführungsbeispiel ein Teleskopelement (8). Das Teleskopelement (8) ist vorzugsweise zwischen dem unteren Ende des Wischerarmes (5) und dem unteren Gelenk (62) angeordnet.

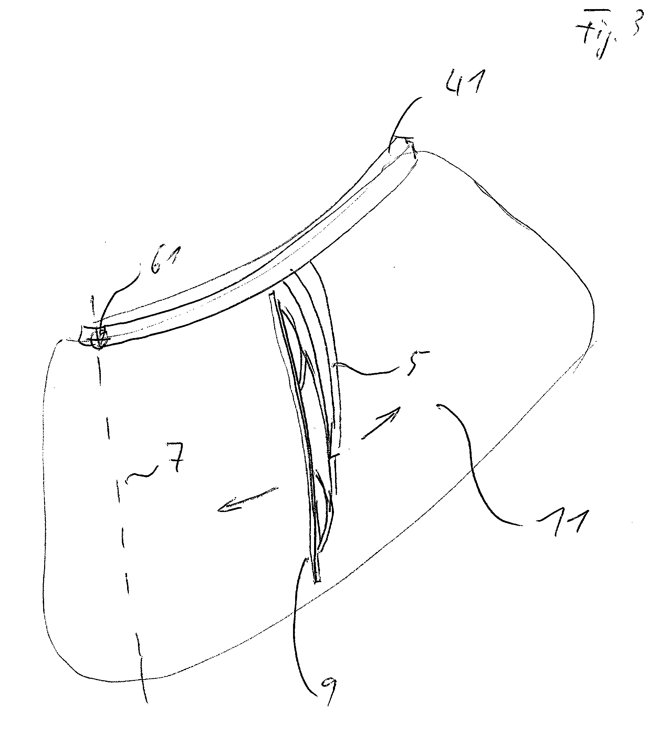

Figur 3 zeigt eine weitere erfindungsgemäße Ausführungsform.

In diesem Fall ist nur am oberen Rand der Glasscheibe (11) eine obere Führungsschiene (41) angeordnet. In diesem Fall ist der Wischerarm (5) kräftiger ausgebildet und trägt ein handelsübliches Wischerblatt (9). In erfindungsgemäßer Weise bewegt sich auch dieser Wischerarm (5) in der oberen Führungsschiene (41) hin und her.

Ähnlich wie bei dem in Figur 2 beschriebenen Ausführungsbeispiel kann bei Erreichen des Endbereiches (7) der Wischerarm (5) über ein oberes Gelenk (61) - nur schematisch in der Endposition dargestellt - entsprechend der trapezförmigen Form der Glasscheibe (11) nach außen schwenken. Es liegt auf der Hand, daß es sinnvoll ist, derartige Schwenkmöglichkeiten am linken und rechten Ende der oberen Führungsschiene (41) vorzusehen (nicht dargestellt).

Diese Schwenkbewegung kann in der Weise erfolgen, daß bei Erreichen des Endbereiches (7) über einen Kontakt oder Sensor diese Schwenkbewegung ausgelöst wird.

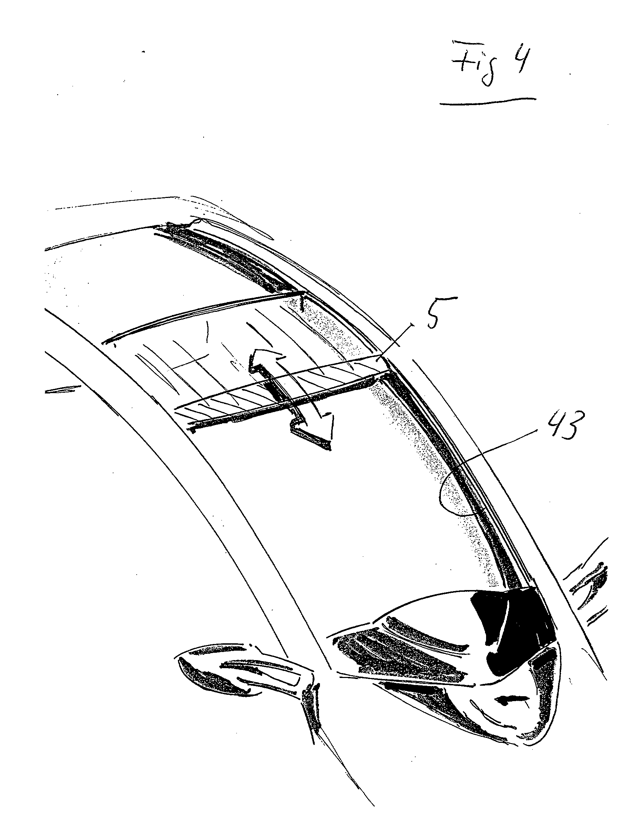

Figur 4 zeigt eine weitere Ausführungsform eines erfindungsgemäßen Scheibenwischers. In dieser Ausführungsform ist schematisch der Scheibenbereich eines Kleinfahrzeuges, beispielsweise dem C1-"Motorrad" von BMW, dargestellt.

Der Wischerarm (5) beginnt hierbei in Höhe des Armaturenbrettes (nicht dargestellt) des Fahrzeuges und kann bis über den Kopfbereich des Fahrers geführt werden. In diesem Fall wird der Wischerarm (5) nicht in oberen und unteren Führungsschienen, sondern in seitlichen Führungsschienen (43) geführt.

In erfindungsgemäßer Weise kann hierbei der Wischerarm (5) einen Querschnitt aufweisen, der einem Dreieck oder einem Teil eines Kreisschnittes entspricht. Ein derartiger Querschnitt hat den Vorteil, daß der Wischerarm (5) in seiner oberen Endposition einen aerodynamisch vorteilhaften Übergang zwischen der Glasscheibe (1) und dem Fahrzeugdach (44) bildet.

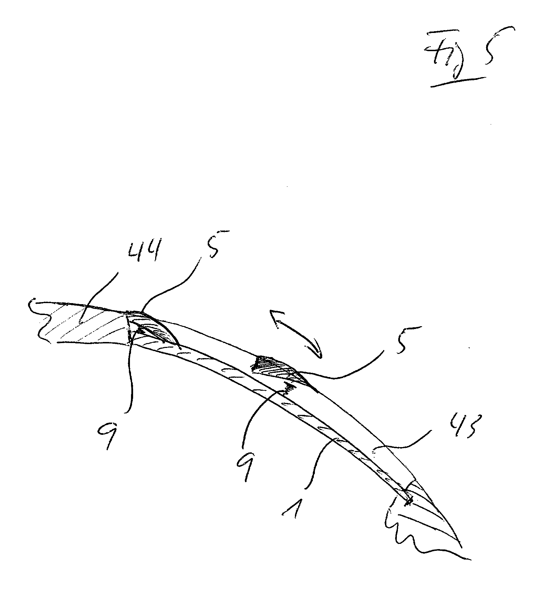

Figur 5 zeigt eine spezielle Ausführungsform des Wischerarmes (5) gemäß Figur 4. Figur 5 zeigt insoweit einen Querschnitt durch eine Ausführungsform entsprechend Figur 4.

Aus Verständlichkeitsgründen ist in dieser Ausführungsform der Wischerarm (5) einmal in einer mittleren Arbeitsposition und einmal in seiner Endposition beim Fahrzeugdach (44) dargestellt. In seiner Arbeitsposition wird der Wischerarm (5) in den seitlichen Führungsschienen (43) (in dieser Ausführungsform nur eine dargestellt) geführt. Das Wischerblatt (9) liegt hierbei auf der Glasscheibe (1) auf und reinigt diese. In der Endposition beim Fahrzeugdach (44) wird der Wischerarm (5) durch eine geeignete Führung seiner Schlitten (nicht dargestellt) auf die Glasscheibe (1) gekippt, so daß er mit der in Fahrtrichtung liegenden auf der Glasscheibe (1) aufliegt und die der Fahrtrichtung abgewandte Kante des Wischerarmes (5) aerodynamisch optimal am Fahrzeugdach (44) anschließt. Das Wischerblatt (9) befindet sich hierbei in einer geschützten, durch den Wischerarm (5) abgekapselten Position.

In der in Fahrtrichtung betrachteten unteren Position kann der Wischerarm (5) in erfindungsgemäßer Weise unterhalb der Motorhaube oder einer vergleichbaren Frontpartie positioniert werden. Dies hat den Vorteil, daß bei einer Nichtbenutzung des Scheibenwischers dieser sich in einer relativ von Umwelteinflüssen oder mechanischen Belastungen gesicherten Position befindet.

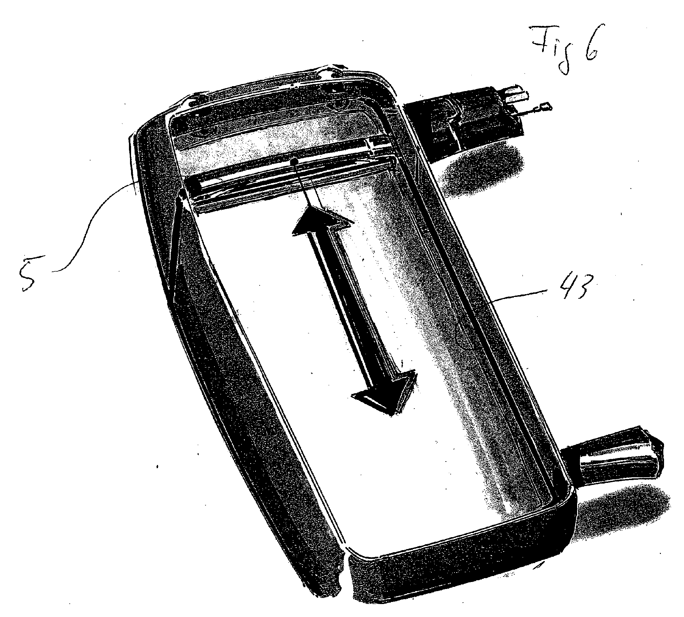

Figur 6 zeigt die Anwendung der Erfindung auf einem Rückspiegel, vorzugsweise eines Lkw-Rückspiegels. Der Wischerarm (5) ist hierbei in seitlichen Führungsschienen (43) angeordnet.

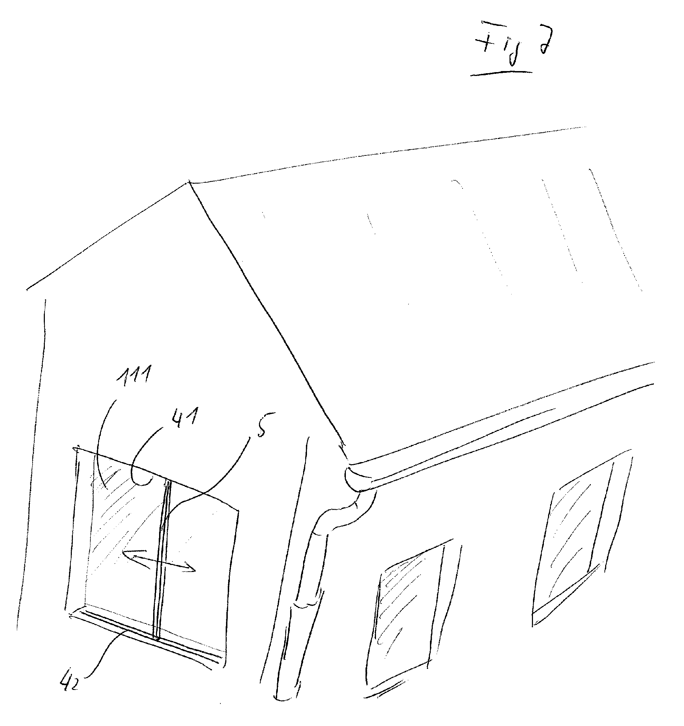

Figur 7 zeigt eine Ausführungsform zur Reinigung von (Fenster-) Scheiben (111). In dieser Ausführungsform bewegt sich der Wischerarm (5) parallel zur Scheibe (111) über die obere Führungsschiene (41) und die untere Führungsschiene (42). Am Wischerarm (5) befindet sich ein Wischerblatt (nicht dargestellt). In diesem Ausführungsbeispiel wird der Wischerarm (5) mit dem Wischerblatt (nicht dargestellt) vertikal über die Scheibe (111) geführt. Dies ist insbesondere dann vorteilhaft, wenn der obere Rahmen (31) und der (im Regelfall gleichlange) untere Rahmen (32) länger ist als die Scheibe hoch.

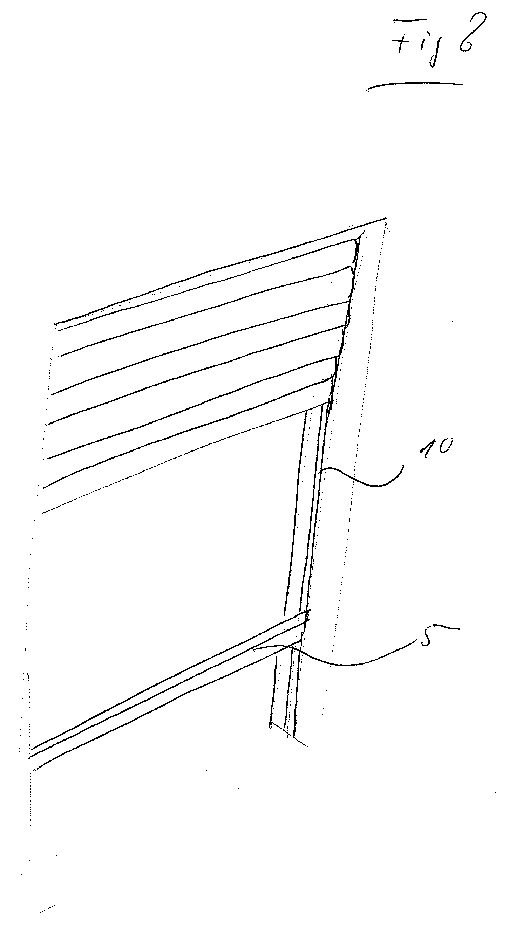

Figur 8 zeigt eine weitere Ausführungsform zur Reinigung von (Fenster-)Scheiben. Sofern die Höhe einer Scheibe (111) größer ist als ihre Breite, ist es vorteilhaft, die Konstruktion um 90° gedreht anzuordnen, so daß der Wischerarm (5) horizontal angeordnet ist. In erfindungsgemäßer Weise könnte dann in diesem Fall der Wischerarm (5) in vorhandenen Jalousie-Schienen (10) als Führungsschiene geführt werden.

In Figur 1 ist bereits beschrieben, daß in erfindungsgemäßer Weise das Wischerblatt (9) mit dem Wischerarm (5) an zwei oder mehr Stellen verbunden ist. Diese konstruktive Lösung ist selbstverständlich auch bei einer der Ausführungsformen gemäß Figur 7 oder 8 zur Reinigung von (Fenster-)Scheiben möglich.

Bei allen Ausführungsformen zur Reinigung von (Fenster-)Scheiben ist es in erfindungsgemäßer Weise auch denkbar, daß mehrere Wischerblätter (9) an einem Wischerarm (5) angeordnet sind. Zur Vermeidung von Streifenbildung auf der Scheibe (1, 11, 111) ist es hierbei vorteilhaft, wenn diese Wischerblätter (9) versetzt zueinander angeordnet sind, so daß ihre Enden überlappen.

### Bezugszeichenliste

- Glasscheibe: 1, 11, 111
- Wassertropfen: 2
- Wischerarm: 5
- Endbereich: 7
- Teleskopelement: 8
- Wischerblatt: 9
- Jalousie-Schienen: 10
- Schlitten: 20, 21
- oberer Rahmen: 31
- unterer Rahmen: 32
- obere Führungsschiene: 41
- untere Führungsschiene: 42
- seitliche Führungsschiene: 43
- Fahrzeugdach: 44
- oberes Gelenk: 61
- unteres Gelenk: 62

## Patentansprüche

1. Mechanischer Scheibenwischer, **dadurch gekennzeichnet, daß** ein Wischerarm (5) parallel zu einer Scheibe (1, 11, 111) angeordnet ist, daß dieser Wischerarm (5) mindestens ein Wischerblatt (9) trägt, welches parallel zum Wischerarm (5) angeordnet ist, daß der Wischerarm (5) mit mindestens einem Schlitten (20, 21) verbunden ist, welcher in einer Führungsschiene (41, 42, 43) angeordnet ist, wobei die Führungsschiene (41, 42, 43) im wesentlichen rechtwinklig zum Wischerarm (5) verläuft, und daß der Schlitten mit einem Antriebselement verbunden ist.

2. Mechanischer Scheibenwischer nach Anspruch 1), **dadurch gekennzeichnet, daß** mindestens ein Schlitten (20, 21) mit einem Zahnstangenantrieb verbunden ist, wobei die Länge des Zahnstangenantriebes der Länge der Führungsschiene (41, 42, 43) entspricht.

3. Mechanischer Scheibenwischer nach Anspruch 1), **dadurch gekennzeichnet, daß** mindestens ein Schlitten (20, 21) mit einem Linearmotor verbunden ist, wobei die Länge des Linearmotor der Länge der Führungsschiene (41, 42) entspricht.

4. Mechanischer Scheibenwischer nach Anspruch 1), **dadurch gekennzeichnet, daß** mindestens ein Schlitten (20, 21) mit einem Seilzug verbunden ist, wobei die Länge des Seilzuges der Länge der Führungsschiene (20, 21) entspricht.

5. Mechanischer Scheibenwischer nach einem oder mehreren der Ansprüche 1) bis 4), **dadurch gekennzeichnet, daß** das Wischerblatt (9) an mehreren Stellen mit dem Wischerarm (5) verbunden ist.

6. Mechanischer Scheibenwischer nach einem oder mehreren der Ansprüche 1) bis 5), **dadurch gekennzeichnet, daß** der Wischerarm (5) mehrere Wischerblätter (9) hintereinander angeordnet sind.

7. Mechanischer Scheibenwischer nach Anspruch 6), **dadurch gekennzeichnet, daß** die Wischerblätter (9) so versetzt zueinander angeordnet sind, daß ihre Enden überlappen.

8. Mechanischer Scheibenwischer nach einem oder mehreren der Ansprüche 1) bis 7), **dadurch gekennzeichnet, daß** der Schlitten (20, 21) mit einem Gleitlager in der Führungsschiene (41, 42, 43) angeordnet ist.

9. Mechanischer Scheibenwischer nach einem oder mehreren der Ansprüche 1) bis 7), **dadurch gekennzeichnet, daß** der Schlitten (20, 21) mit Gleitrollen in der Führungsschiene (41, 42, 43) angeordnet sind.

10. Mechanischer Scheibenwischer nach einem oder mehreren der Ansprüche 1) bis 9), **dadurch gekennzeichnet, daß** das Antriebselement ein Linearmotor ist.

11. Mechanischer Scheibenwischer nach einem oder mehreren der Ansprüche 1) bis 9), **dadurch gekennzeichnet, daß** das Antriebselement ein Seilzug ist.

12. Mechanischer Scheibenwischer nach einem oder mehreren der Ansprüche 1) bis 9), **dadurch gekennzeichnet, daß** das Antriebselement ein Zahnstangenantrieb ist.

13. Mechanischer Scheibenwischer nach einem oder mehreren der Ansprüche 1) bis 9), **dadurch gekennzeichnet, daß** das Antriebselement ein Spindelantrieb ist.

14. Mechanischer Scheibenwischer nach einem oder mehreren der Ansprüche 1) bis 13), **dadurch gekennzeichnet, daß** der Wischerarm (5) an den Schlitten (20, 21) gelenkig angeordnet ist und daß eine der beiden Führungsschienen (41, 42, 43) länger ist als die andere, daß der Wischerarm (5) ein Teleskopelement (8) besitzt.

15. Mechanischer Scheibenwischer nach Anspruch 14), **dadurch gekennzeichnet, daß** das Teleskopelement (8) zwischen dem unteren Ende des Wischerarmes (5) und dem unteren Gelenk (62) angeordnet ist.

16. Mechanischer Scheibenwischer nach einem oder mehreren der Ansprüche 1) bis 15), **dadurch gekennzeichnet, daß** der Wischerarm (5) einen Querschnitt in Form eines Dreieckes oder eines Teiles eines Kreisabschnittes besitzt, daß der Wischerarm (5) in seiner oberen Position auf die Glasscheibe 1) gekippt angeordnet ist.

17. Mechanischer Scheibenwischer nach einem oder mehreren der Ansprüche 1) bis 16), **dadurch gekennzeichnet, daß** der Wischerarm (5) in seiner unteren Endposition unterhalb der Motorhaube oder einer vergleichbaren Frontpartie positioniert ist.

18. Mechanischer Scheibenwischer nach einem oder mehreren der Ansprüche 1) bis 17), **dadurch gekennzeichnet, daß** die Schlitten (20, 21) in Jalousie-Schienen (10) angeordnet sind.
